**Europäisches Patentamt**

**European Patent Office**

**Office européen des brevets**

(19)

(11) Numéro de publication: **0 136 925**
**B1**

(12) # FASCICULE DE BREVET EUROPÉEN

(45) Date de publication du fascicule du brevet:
23.09.87

(51) Int. Cl.⁴: **B 23 Q 16/00**

(21) Numéro de dépôt: **84401439.9**

(22) Date de dépôt: **06.07.84**

(54) Dispositif d'indexage et de blocage d'un plateau rotatif.

(30) Priorité: **12.07.83 FR 8311600**

(43) Date de publication de la demande:
**10.04.85 Bulletin 85/15**

(45) Mention de la délivrance du brevet:
**23.09.87 Bulletin 87/39**

(84) Etats contractants désignés:
**AT BE CH DE FR GB IT LI LU NL SE**

(56) Documents cité:
**DE-A-2 658 512**
**DE-B-1 112 680**
**DE-C-908 537**
**FR-A-2 357 950**
**GB-A-3 773**
**US-A-2 291 151**
**US-A-2 493 232**
**US-A-2 874 814**
**US-A-3 050 321**
**US-A-3 169 607**
**US-A-3 842 947**

(73) Titulaire: **ERNAULT- TOYODA AUTOMATION, Rue de Bourgneuf, F-49300 Cholet (FR)**

(72) Inventeur: **Somogy, Nicolas, 2 Place Pasteur, F-06340 la Trinite (FR)**

(74) Mandataire: **Loriot, Jacques, c/o SA. FEDIT-LORIOT 38, avenue Hoche, F-75008 Paris (FR)**

## Description

L'invention concerne les dispositifs d'indexage et de blocage d'un plateau rotatif sur un corps porte-plateau, notamment de machine-outil.

Elle vise en particulier, les dispositifs de ce genre comportant:

- une couronne d'indexage et de blocage solidaire du plateau rotatif, coaxiale à celui-ci, et présentant des encoches de section en forme générale de "V" taillées dans une surface marginale de révolution principale adjacente à une surface marginale de révolution auxiliaire dans laquelle débouchent latéralement lesdites encoches, les flancs de ces encoches étant divergents à partir du fond des encoches, à la fois vers la surface marginale de révolution principale et vers la surface marginale de révolution auxiliaire,

- une pluralité de billes d'indexage et de blocage partiellement engagées, en permanence, respectivement dans des gorges rectilignes (axiales ou radiales), également de section en forme générale de "V", pratiquées dans une surface de révolution du corps porte-plateau coaxiale à la couronne d'indexage et de blocage et située en regard de la surface marginale de révolution auxiliaire de la couronne d'indexage et de blocage, les flancs desdites gorges du corps porte-plateau étant divergents à partir du fond vers l'extérieur, les billes pouvant occuper, sélectivement le long desdites gorges, soit une position de blocage du plateau dans laquelle elles sont engagées partiellement aussi dans les encoches de la couronne d'indexage et de blocage, soit une position de libération du plateau dans laquelle elles sont situées hors desdites encoches,

- et des moyens de commande de blocage pour solliciter les billes d'indexage et de blocage le long des gorges du corps porte-plateau.

Le brevet américain 3 842 947, par exemple, décrit un dispositif de ce genre. Toutefois, dans le mode de réalisation représenté dans ce brevet, les moyens de commande qui sollicitent les billes d'indexage et de blocage le long des gorges du corps porte-plateau rotatif sont constitués par un organe annulaire auquel on doit imprimer un mouvement axial afin qu' il pousse les billes vers le fond des encoches de la couronne d'indexage et de blocage. Or, si l'on veut réaliser un indexage précis de la couronne, il est nécessaire que toutes les billes réparties sur la circonférence de la couronne soient pressées vers le fond des encoches rigoureusement avec la même pression; cette condition implique donc que l'on doit agir sur l'organe annulaire de commande de poussée au voisinage de l'axe de celui-ci, ce qui nécessite la réalisation de moyens sophistiqués; cela constitue déjà un inconvénient. De plus, dans une telle conception, on ne peut plus disposer de la totalité de l'espace central de l'ensemble du dispositif sur toute son étendue axiale, ce qui constitue un inconvénient supplémentaire.

Le but de l'invention est de réaliser un dispositif du genre en question qui ne présente pas les inconvénients qu'on vient d'indiquer plus haut.

A cet effet, suivant l'invention, les moyens de commande de blocage sont constitués par une came montée à pivotement coaxialement à la couronne d'indexage et de bolcage et présentant, aussi, d'une part, une surface marginale de révolution principale en regard de la surface marginale de révolution principale encochée de la couronne d'indexage et de blocage et pourvue d'encoches en nombre égale à celui des gorges du corps porte-plateau et, d'autre part, une surface marginale de révolution auxiliaire adjacente à la surface marginale de révolution principale et dans laquelle débouchenet latéralement les encoches de la came, la surface marginale de révolution auxiliaire de la came étant située dans le prolongement de la surface marginale de révolution auxiliaire de la couronne d'indexage et de blocage et également en face de la surface de révolution du corps porte-plateau dans laquelle sont pratiquées les gorges rectiilignes, les encoches de la came ayant une section également en forme générale de "V" avec des flancs qui divergent à partir du fond des encoches, à la fois vers la surface marginale de révolution principale et vers la surface marginale de révolution auxiliaire de ladite came, de façon telle que, dans une position angulaire de la came correspondant au blocage du plateau rotatif, les parties de la surface marginale de révolution principale de la came, situées entre les encoches de cette surface, maintiennent les billes pressées contre les flancs des encoches de la couronne d'indexage et de blocage et contre les flancs des gorges du corps porte-plateau, tandis que, dans une position angulaire de la came correspondant au déblocage du plateau rotatif, les billes peuvent sortir complètement des encoches de la couronne d'indexage et de blocage en pénétrant dans les encoches de la came et libérer ainsi la couronne en rotation.

Grâce à cette conception particulière, l'organe de commande de blocage, à savoir: la came, n'a à subir aucun déplacement axial, mais seulement un mouvement de pivotement coaxialement à l'ensemble du dispositif. Il en résulte que cette came de commande est une pièce de forme annulaire qui n'a pas besoin d'être reliée à un organe central d'actionnement, de sorte que l'ensemble du dispositif est relativement simple et que toute sa partie centrale reste disponible à d'autres fins qu'à la commande d'indexage et de blocage.

D'autres caractéristiques particulières de structure ressortiront de la description qui va suivre de quelques modes de réalisation de l'invention à l'appui des dessins annexés dans lesquels:

La figure 1 est une coupe verticale diamétrale faite suivant la ligne brisée I-I de la figure 2 d'un premier mode de réalisation de l'invention appliquée à l'indexage et au blocage d'un plateau rotatif porte-pièce d'une machine-outil, le dispositif étant représenté en position de blocage,

La figure 2 est une coupe horizontale faite suivant la ligne II-II de la figure 1,

La figure 3 est une vue de profil partielle, observée dans la direction de la flèche III de la figure 1 et montrant la coopération des éléments de blocage avec la couronne et la came de commande,

La figure 4 est une vue analogue à celle de la figure 3, mais le dispositif étant supposé en position de déblocage,

La figure 5 est une coupe radiale partielle faite suivant la ligne V-V de la figure 4, et

Les figures 6 à 8 sont des demi-coupes verticales partielles avec des arrachements, de trois variantes du dispositif représenté sur les Figures 1 à 5.

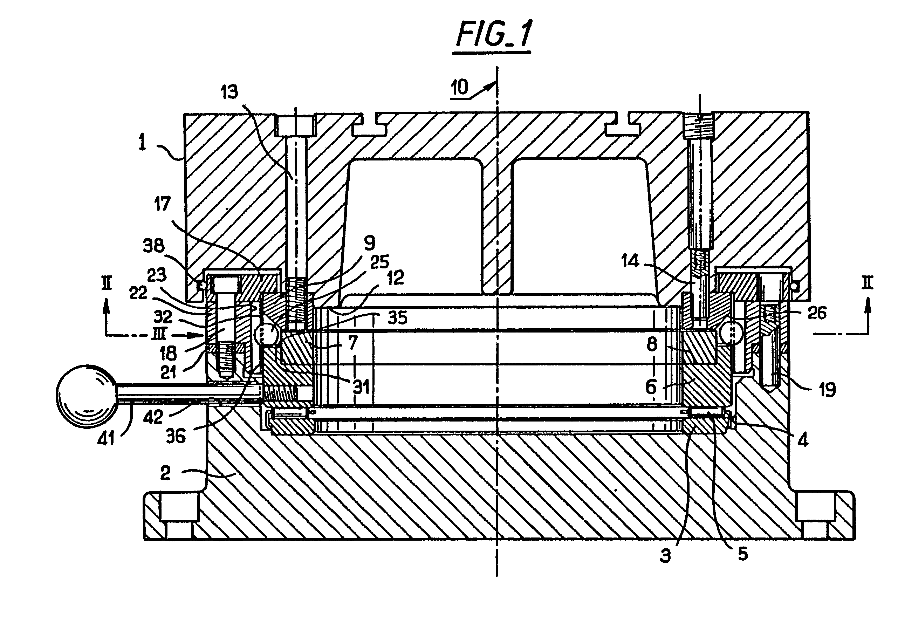

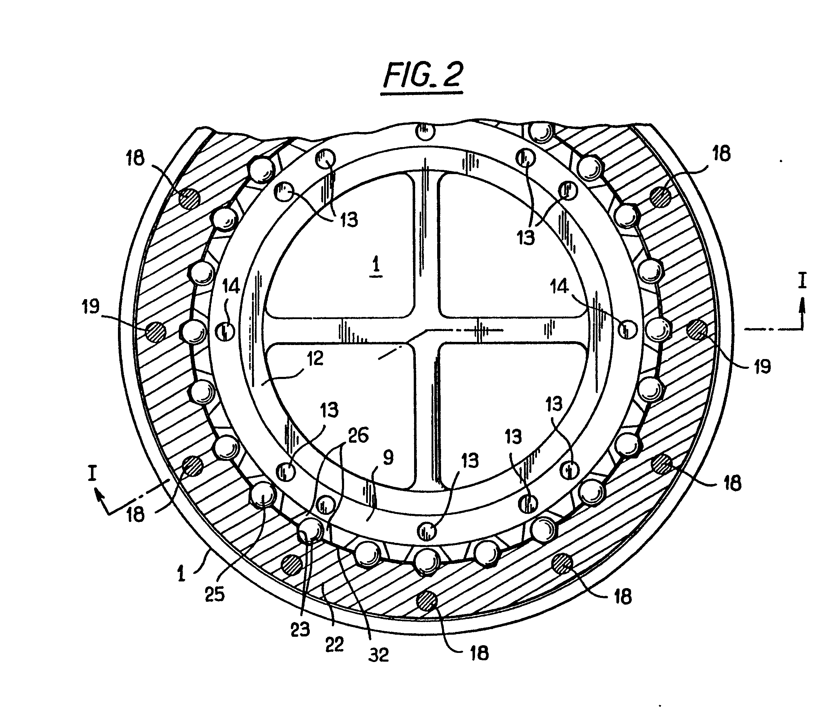

Le dispositif représenté dans son ensemble sur les Figs. 1 et 2 est destiné à assurer l'indexage et le blocage d'un plateau rotatif 1 qui sert à supporter une pièce à usiner sur une machine-outil, par exemple une perceuse.

Le plateau 1, dont l'axe géométrique 10 est vertical dans l'exemple, est supporté par un corps 2 par l'intermédiaire d'un certain nombre de pièces coaxiales qui sont: une couronne plate 3 qui est logée dans le fond d'un évidement cylindrique 4 du corps 2 et qui sert de chemin de roulement inférieur à une rangée annulaire de galets 5, une came annulaire de commande de blocage 6 qui repose sur les galets de roulement 5, une couronne supplémentaire cylindrique 7 qui repose dans un embrèvement cylindrique 8 de la came 6, et une couronne d'indexage et de blocage 9 dans laquelle est centré un bossage cylindrique 12 du plateau et qui est rendue parfaitement solidaire de ce dernier par des vis 13, ainsi que par des pieds de centrage cylindriques lisses 14. L'ensemble de toutes ces pièces est retenu, vers le haut, par une bride annulaire 17 rendue solidaire du corps 2 par des vis 18 et des pieds de centrage 19. Entre la bride annulaire 17 et le dessus du corps, sont interposées une rondelle d'épaisseur calibrée 21 et une couronne à gorges 22 dont les gorges 23, de section en forme de "V", sont pratiquées en direction axiale dans la surface cylindrique intérieure de ladite couronne à gorges,

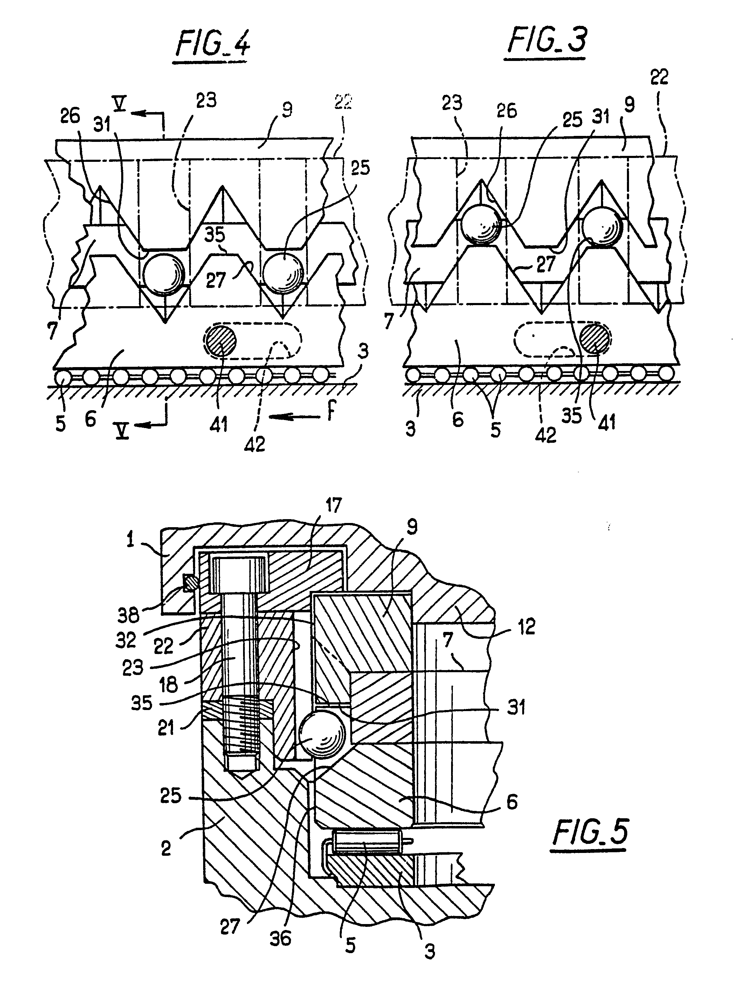

L'indexage et le blocage du plateau rotatif 1 sont assurés par des éléments dans l'exemple des billes 25 qui sont engagées partiellement en permanence, dans les gorges verticales 23, et qui peuvent se loger partiellement aussi dans des encoches 26 de la couronne d'indexage et de blocage 9 ou bien dans des encoches 27 (voir aussi Fig. 3) de la came de commande de blocage 6 dans des conditions qui vont maintenant être précisées.

Il y a une seule bille dans chaque gorge verticale 23 de la couronne à gorges 22 solidaire du corps. Le nombre des encoches 26 de la couronne d'indexage et de blocage 9 solidaire du plateau ainsi que le nombre des encoches 27 de la came de commande de blocage 6 sont égaux, chacun, au nombre des gorges verticales 23.

La couronne d'indexage et de blocage 9 présente une surface de révolution qu'on appellera, dans ce qui suit, surface marginale principale 31 et c'est dans cette surface que sont pratiquées les encoches 26; elle est adjacente à une surface marginale de révolution auxiliaire 32 de cette couronne, dans laquelle débouchent latéralement les encoches 26. Dans cet exemple, la surface marginale de révolution principale 31 de la couronne d'indexage et de blocage 9 est une surface frontale plane, tandis que la surface marginale de révolution auxilaire 32 est une surface cylindrique extérieure de ladite couronne et elle est normale à la surface marginale principale. Lorsque la couronne d'indexage et de blocage 9 pivote avec le plateau sur le corps, la direction du mouvement de sa surface marginale principale 31 est perpendiculaire à la direction (axiale dans l'exemple) des gorges verticales 23. Les encoches 26 de la couronne d'indexage et de blocage sont en forme de troncs de pyramides triangulaires dont la grande base se trouve sur la surface marginale auxiliaire 32 de la couronne et dont une face latérale fictive est perpendiculaire à la grande base et se trouve sur la surface marginale principale 31 de la couronne, tandis que la petite base du tronc de pyramide est formée par une partie d'une surface de retenue qui, dans l'exemple, est constituée par la surface cylindrique extérieur de la couronne supplémentaire 7.

La came de commande de blocâge 6 présente une surface marginale de révolution principale 35 adjacente à la surface marginale de révolution principal encochée 31 de la couronne d'indexage et de blocage 9 et c'est dans cette surface que sont pratiquées les encoches 27; comme la couronne d'indexage et de blocage, la came de commande de blocage présente une surface marginale de révolution auxiliaire 36 dans laquelle débouchent latéralement les encoches 27. Semblablement aussi, dans cet exemple, la surface marginale de révolution principale 35 de la came est une surface frontale plane, tandis que sa surface marginale de révolution auxiliaire 36 est une surface cylindrique extérieure de ladite came et elle est normale à la surface marginale principale. Lorsqu'on fait pivoter la came 6 dans le corps, la direction du mouvement de sa surface marginale principale 35 est perpendiculaire à la direction axiale des gorges fixes 23. Dans l'exemple, les encoches 27 de la came de commande de blocage 6 ont la même forme que celle des encoches de la couronne d'indexage et de blocage 9, mais elles n'ont pas besoin d'être exécutées avec la même précision, car elles ne servent qu'à l'escamotage des billes pour le déblocage, comme on le verra plus loin, et ne participent en aucune façon au positionnement précis et au blocage du plateau.

Afin que le dispositif puisse fonctionner convenablement, il est prévu des jeux entre certains organes. Ainsi, il existe un jeu axial entre la face supérieure de la couronne supplémentaire 7 et la face inférieure de la couronne d'indexage et de blocage 9 lorsque le dispositif est en position de blocage comme représenté sur la Fig. 1; un jeu axial entre les surfaces marginales principales 31 et 35 de la couronne d'indexage et de blocage 9 et de la came de commande de blocage 6, respectivement; un jeu radial entre, d'une part, l'alésage de la couronne à gorges 22 et, d'autre part, les surfaces marginales auxiliaires 32 et 36 de la couronne d'indexage et de blocage 9 et de la came de commande de blocage 6, respectivement, qui sont de même diamètre; un jeu radial entre la surface cylindrique extérieure de la couronne d'indexage et de blocage 9 et l'alésage de la bride annulaire 17; et enfin, des jeux radiaux et axiaux entre ladite bride et le plateau 1 dans une rainure annulaire duquel est logé un joint torique 38.

Pour faire tourner le plateau 1 et pour faire pivoter la came de commande de blocage 6, on pourrait adopter tous systèmes classiques appropriés; dans l'exemple, on suppose qu'on fait simplement tourner le plateau à la main et, pour fair pivoter la came de commande de blocage, on a prévu une manette 41 qui est vissée radialement dans ladite came et qui passe à travers une ouverture 42 en forme d'arc de cercle pratiquée dans le corps 2 et dont les deux extrémités servent respectivement de butées pour la détermination des deux positions de blocage et de déblocage du dispositif. La longueur de cette ouverture est égale à un demi-pas des encoches 26, 27 de la couronne de blocage 9 et de la came de commande de blocage 6.

On a déjà indiqué, plus haut, que le dispositif est représenté sur les figs. 1 à 3 en position de blocage, c'est-à-dire que les parties de la surface marginale principale 35 de la came situées entre les encoches 27 de cette surface maintiennent les billes 25 pressées contre les parois des encoches 26 de la couronne d'indexage et de blocage 9 et contre les parois des gorges 23. Pour que ce résultat soit obtenu il est indispensable que la structure du dispositif soit telle que, dans cette position de blocage, les billes 25 soient en saillie par rapport à la surface marginale principale 31 de la couronne d'indexage et de blocage 9 et qu'elles dépassent très légèrement l'emplacement de la surface marginale principale 35 de la came de commande de blocage 6, de manière à subir une précharge de la part des parties de ladite surface marginale principale de la came situées entre les encoches de ladite came. Ainsi, l'ensemble formé par la came de commande de blocage, les billes et la couronne d'indexage et de blocage est fermement serré entre la bride supérieure 17 et les galets de roulement 5 qui reposent dans le fond du corps 2, en même temps que les billes sont fortement appuyées dans les gorges verticales fixes 23. Il en résulte que la couronne d'indexage et de blocage 9 est rigoureusement indexée angulairement par rapport au corps et fait bloc avec celui-ci, de sorte que le plateau 1, solidaire de ladite couronne, se trouve également parfaitement indexé et bloqué par rapport au corps. Par une rectification précise de l'épaisseur de la rondelle calibrée 21 on peut doser exactement la valeur de la précharge des billes.

Pour indexer le plateau, il suffit de faire pivoter la came de commande 6 de un demi-pas des encoches en amenant la manette 41 à l'autre extrémité de l'ouverture 42, comme représenté sur la Fig. 4, c'est-à-dire dans le sens de la flèche f; pendant ce mouvement, les billes 25 descendent le long des gorges verticales fixes 23 et s'escamotent progressivement dans les encoches 27 de la came de commande 6, comme représenté sur les Figs. 4 et 5; les billes se trouvent donc en-dessous de la surface marginale principale 31 de la couronne d'indexage et de blocage 9 et l'on peut, dès lors, faire pivoter le plateau de tout angle désiré; les billes demeurent emprisonnées sans serrage, entre les gorges verticales 23, les faces latérales des encoches 27 de la came de commande 6 et la surface cylindrique extérieure de la couronne supplémentaire 7. Pour rebloquer le plateau, il suffit évidemment de faire pivoter la came 6 en sens inverse, les billes sont alors refoulées, par les flancs inclinés des encoches 27 de la came, dans d'autres encoches 26 de la couronne d'indexage et de blocage 9 correspondant à la nouvelle position angulaire du plateau, en même temps qu'elles remontent le long des gorges verticales 23.

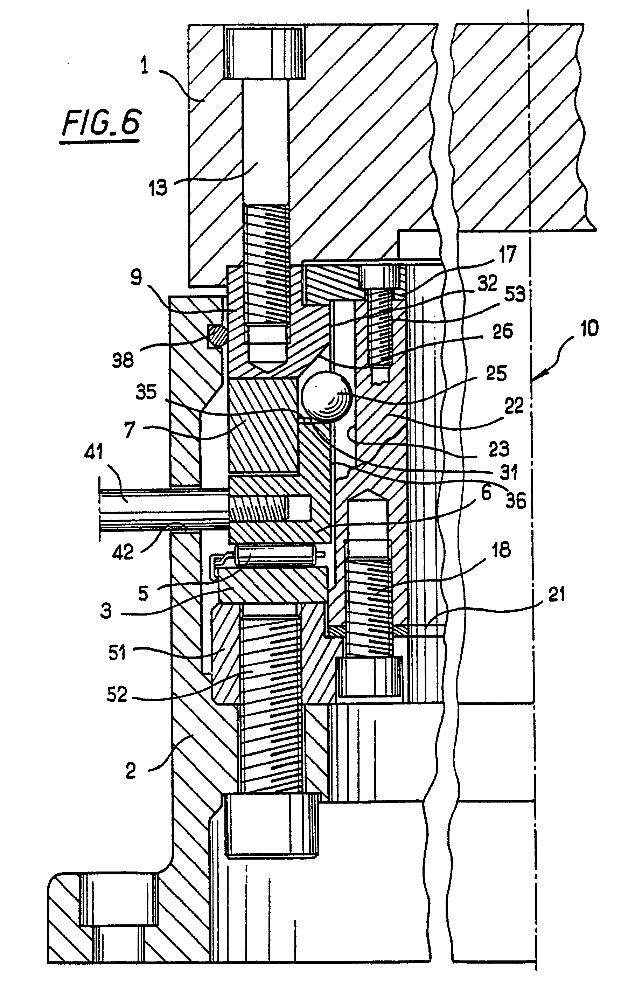

Sur la Fig. 6 on a représenté partiellement un deuxième mode de réalisation qui ne diffère essentiellement du premier représenté sur les Figs. 1 à 5 que par le fait que la couronne fixe 22 à gorges verticales 23 est plus près de l'axe géométrique 10 du plateau rotatif 1 que l'ensemble forme par la couronne d'indexage et de blocage 9, et la came de blocage 6, c'est-à-dire, en d'autre termes, par le fait que la couronne à gorges 22 est disposée à l'intérieur de la couronne d'indexage et de blocage et de la came de commande de blocage, alors que, dans le premier mode de réalisation décrit plus haut, elle se trouvait à l'extérieur de celles-ci. Sur la présente figure 6 on a conservé les mêmes chiffres de référence que sur les Figs. 1 à 5 pour désigner les organes correspondants. On ne va donc indiquer que les différences entre les deux modes de réalisation.

En partant du bas, on remarque que la rondelle d'épaisseur calibrée 21 et la couronne de roulement 3 des galets 5 ne reposent pas directement sur le corps 2, mais sur une pièce annulaire de support 51 fixée dans le corps par des vis 52. La bride annulaire supérieure de retenue 17 est fixée sur la couronne à gorges 22 par d'autres vis 53 que les vis 18 servant déjà à fixer cette couronne dans le corps. La surface cylindrique de retenue des billes 25 est formée, cette fois, par la surface intérieure de la couronne supplémentaire 7 au lieu de sa surface extérieure.

Le fonctionnement de ce deuxième mode de réalisation est le même que celui du premier mode de réalisation.

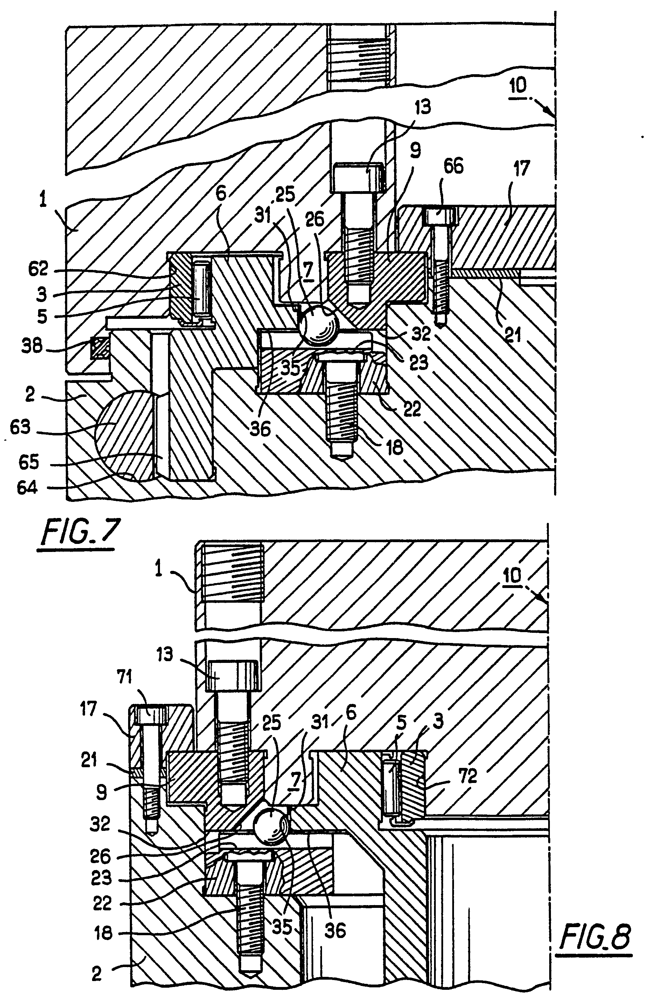

En se référant maintenant aux Figs. 7 et 8 on peut voir deux autres variantes qui se différencient essentiellement des deux premiers modes de réalisation par le fait que les gorges 23, au lieu d'être parallèles à l'axe 10 de l'ensemble, occupent, cette fois, une position radiale, de sorte que les surfaces marginales principales 31 et 35 respectivement de la couronne d'indexage 9 et de la came de commande de blocage 6, au lieu d'être des surfaces frontales planes, sont maintenant des surfaces cylindriques, tandis qu'au contraire, les surfaces marginales auxiliaires 32 et 36 de ces mêmes organes, au lieu d'être des surfaces cylindriques, sont maintenant des surfaces frontales planes. Cette nouvelle disposition générale conduit à deux possibilités, selon que la came de commande de blocage 6 se trouve à l'extérieur ou à l'intérieur de la couronne d'indexage et de blocage 9.

Sur la Fig. 7, on a donc représenté un troisième mode de réalisation dans lequel la came de commande de blocage 6 se trouve à l'extérieur de la couronne d'indexage et de blocage 9. Elle prend appui contre un alésage 62 du plateau rotatif 1, par l'intermédiaire de la rangée de galets cylindriques 5 et de la bague de chemin de roulement 3. On peut, dans cet exemple, la faire pivoter de un demi-pas au moyen d'un mécanisme comportant une crémaillère 63 qui peut coulisser dans un alésage 64 du corps 2 orthogonal à l'axe 10 de l'ensemble et qui est en prise avec une denture 65 de ladite came. La bride de retenue 17 est fixée, avec la rondelle d'épaisseur calibrée 21, directement sur le corps 2 au moyen de vis 66. La couronne 22 dans laquelle sont pratiquées les gorges 23 se présente sous la forme d'une bague plate et les gorges, de direction radiale, se trouvent dans sa face plane supérieure; elle est fixée directement sur le corps par les vis 18. La relation entre les billes d'indexage et de blocage 25 avec les gorges fixes 23, ainsi qu'avec les encoches de la couronne d'indexage et de blocage 9 et de la came de commande de blocage 6, est la même que dans les modes de réalisation décrits plus haut et le fonctionnement de l'ensemble du dispositif est également le même.

Sur la Fig. 8, on a représenté un quatrième mode de réalisation qui ne diffère essentiellement de celui de la Fig. 7 que par le fait que c'est la came de commande de blocage 6 qui est disposée à l'intérieur de la couronne d'indexage et de blocage 9. La couronne à gorges 22 est encore une couronne plate et les gorges 23 sont pratiquées dans la face supérieure de cette couronne, dans une direction radiale par rapport à l'axe géométrique 10 de l'ensemble.

La bride annulaire de retenue 17 est fixée avec la rondelle d'épaisseur calibrée 21 directement sur le corps 2 au moyen de vis 71. La came 6 de commande de blocage prend appui contre un bossage cylindrique central 72 du plateau rotatif 1, par l'intermédiaire de la rangée de galets cylindriques 5 et de la bague de chemin de roulement 3. La relation entre les billes d'indexage et de blocage 25 avec les gorges fixes 23, ainsi qu'avec les encoches de la couronne d'indexage et de blocage 9 et de la came de commande de blocage 6, est la même que dans tous les modes de réalisation décrits plus haut et le fonctionnement du dispositif demeure inchangé.

**Revendications**

1. Dispositif d'indexage et de blocage d'un plateau (1) rotatif sur un corps (2) porte-plateau comportant;
- une couronne (9) d'indexage et de blocage solidaire du plateau rotatif, coaxiale à celui-ci et présentant des encoches (26) de section en forme générale de "V" taillées dans une surface marginale de révolution principale (31), adjacente à une surface marginale de révolution auxiliaire (32) dans laquelle débouchent lateralement lesdites encoches, les flacs de ces encoches (26) étant divergents à partir du fond des encoches, à la fois vers la surface marginale de révolution principale (31) et vers la surface marginale de révolution auxiliaire (32),
- une pluralité de billes (25) d'indexage et de blocage partiellement engagées, en permanence, respectivement dans des gorges rectilignes (23) (axiales ou radiales), également de section en forme générale de "V", pratiquées dans une surface de révolution du corps (2) porte-plateau coaxiale à la couronne (9) d'indexage et de blocage et située en regard de la surface marginale de révolution auxiliaire (32) de la couronne d'indexage et de blocage, les flancs desdites gorges (23) du corps (2) porte-plateau étant divergents à partir du fond vers l'extérieur, les billes (25) pouvant occuper, sélectivement le long desdites gorges, soit une position de blocage du plateau dans laquelle elles sont engagées partiellement aussi dans les encoches (26) de la couronne (9) d'indexage et de blocage (fig. 3), soit une position de libération du plateau (1) dans laquelle elles sont situées hors desdites encoches (26) (fig. 4),
- et des moyens de commande (6) de blocage pour solliciter les billes (25) d'indexage et de blocage le long des gorges (23) du corps (2) porte-plateau,
caractérisé en ce que les moyens de commande de blocage sont constitués par une came (6) montée à pivotement coaxialement à la couronne d'indexage et de blocage (9) et présentant aussi d'une part, une surface marginale de révolution principale (35) en regard de la surface marginale de révolution principale encochée (31) de la couronne d'indexage et de blocage (9) et pourvue d'encoches (27) en nombre égal à celui des gorges (23) du corps (2) porte-plateau et, d'autre part, une surface marginale de révolution auxiliaire (36) adjacente à la surface marginale de révolution principale et dans laquelle débouchent latéralement les encoches (27) de la came, la surface marginale de révolution auxiliaire (36) de la came étant située dans le prolongement de la surface marginale de révolution auxiliaire (32) de la couronne d'indexage et de blocage et également en face de la surface de révolution du corps (2) porte-plateau dans laquelle sont pratiquées les gorges rectilignes (23), les encoches (27) de la came ayant une section également en forme générale de "V" avec des flancs qui divergent à partir du fond des encoches, à la fois vers la surface marginale de révolution principale (35) et vers la surface marginale de révolution auxiliaire (36) de ladite came, de façon telle que, dans une position angulaire de la came (6) correspondant au blocage du plateau (1) rotatif les parties de la surface marginale de révolution principale (35) de la came, situées entre les encoches (27) de cette surface, maintiennent les billes (25) pressées contre les flancs des encoches (26) de la couronne (9) d'indexage et de blocage et contre les flancs des gorges (23) du corps (2) porte-plateau, tandis que, dans une position angulaire de la came (6) correspondant au déblocage du plateau (1) rotatif, les billes (25) peuvent sortir complètement des encoches (26) de la couronne d'indexage et de blocage en pénétrant dans les encoches (27) de la came et libérer ainsi la couronne en rotation.

2. Dispositif suivant la revendication 1, caractérisé en ce que l'ensemble formé par la couronne d'indexage et de blocage (9), les billes (25) et la came (6), est enserré entre deux surfaces de révolution annulaires parallèles qui font corps avec un seul des deux organes constitués par le corps (2) porte-plateau ou le plateau rotatif (1), la came (6) prenant appui, de préférence par l'intermédiaire de corps de roulement (5), contre l'une de ces deux surfaces qui est tournée vers la surface marginale de révolution principale (31) de la couronne d'indexage et de blocage (9).

3. Dispositif suivant la revendication 1, caractérisé en ce que les surfaces marginales principales encochées (31, 35) de la couronne d'indexage et de blocage (9) et de la came (6) sont des surfaces planes frontales de même diamètre, tandis que les surfaces marginales auxiliaires (32, 36) de ladite couronne et de la came sont des surfaces cylindriques de même diamètre, et que les gorges (23) précitées (23) étant de direction axiale.

4. Dispositif suivant la revendication 3, caractérisé en ce que les surfaces marginales auxiliaires de la couronne et de la came sont des surfaces cylindriques extérieures (32, 36), et en ce que les gorges (23) sont situées sur un rayon plus grand que celui desdites surfaces marginales auxiliaires encochées.

5. Dispositif suivant la revendication 3, caractérisé en ce que les surfaces marginales auxiliaires de la couronne et de la came sont des surfaces cylindriques intérieures (32, 36) et en ce que les gorges (23) sont situées sur un rayon plus petit que celui desdites surfaces marginales auxiliaires.

6. Dispositif suivant la revendication 1, caractérisé en ce que les surfaces marginales principales (31, 35) de la couronne d'indexage et de blocage (9) et de la came (6) sont des surfaces cylindriques tandis que les surfaces marginales auxiliaires (32, 36) de la couronne et de la came sont planes, paralèlles et coaxiales, et que l'une des deux pièces constituées par la couronne (9) et la came (6) est disposée à l'intérieur de l'autre, les gorges (23) étant de direction radiale.

7. Dispositif suivant la revendication 1, caractérisé en ce que les encoches (26) de la couronne d'indexage et de blocage (9) sont en forme de troncs de pyramides triangulaires dont la grande base se trouve sur la surface marginale auxiliaire (32) de la couronne et dont une face latérale fictive est perpendiculaire à la grande base et se trouve sur la surface marginale principale (31) de ladite couronne.

8. Dispositif suivant la revendication 7, caractérisé en ce que la petite base des troncs de pyramides est formée par une partie d'une surface de retenue appartenant à une couronne supplémentaire (7) coaxiale à la couronne d'indexage et de blocage (9).

9. Dispositif suivant la revendication 1, caractérisé en ce que les surfaces marginales auxiliaires (32, 36) de la couronne d'indexage et de blocage (9) et de la came (6) sont respectivement normales aux surfaces marginales principales correspondantes (31, 35).

10. Dispositif suivant la revendication 1, caractérisé en ce que les billes (25), en position de la came (6), correspondant au blocage du plateau (1) rotatif, sont en saillie par rapport à la surface marginale principale (31) de la couronne d'indexage et de blocage (9) et dépassent très légèrement l'emplacement de la surface marginale principale (35) de la came (6) de manière à subir une précharge de la part des parties de ladite surface marginale principale de la came situées entre les encoches (27) de ladite came.

11. Dispositif suivant la revendication 1, caractérisé en ce que la profondeur des encoches (27) de la came (6) est telle que, en position de de la came (6) correspondant au blocage du plateau (1) rotatif, un jeu soit ménagé entre les billes (25) engagées dans lesdites encoches de la came et la surface marginale principale (31) de la couronne d'indexage et de blocage (9).

**Claims**

1. Indexing and locking mechanism for a rotary turn table (1) on a table carrier body (2) comprising:
   - an indexing and locking ring (9) fastened to the rotary table, coaxial to the latter, and provided with notches (26) of a generally V-shaped section cut in a main marginal surface of revolution (31) adjacent to an auxiliary marginal surface of revolution (32) into which the said notches lead laterally, the flanks of these notches (26) being divergent, from the bottom of the notches, both towards the main marginal surface of revolution (31) and towards the auxiliary marginal surface of revolution (32),

- a plurality of indexing and locking balls (25) partially engaged permanently respectively in (axial or radial) rectilinear grooves (23), likewise of generally V-shaped section, formed in a surface of revolution of the table carrier body (2) coaxial to the indexing and locking ring (9) and situated opposite the auxiliary marginal surface of revolution (32) of the indexing and locking ring, the flanks of the said grooves (23) in the table carrier body (2) being divergent from the bottom to the outside, the balls (25) being adapted to occupy selectively along the said grooves either a position locking the table, in which they are also partially engaged in the notches (26) in the indexing and locking ring (9) (figure 3) or a position in which the table (1) is freed and in which they are situated outside the said notches (26) (figure 4),

- and locking control means (6) for urging the indexing and locking balls (25) along the grooves (23) in the table carrier body (2),

characterized in that the locking control means are composed of a cam (6) mounted for pivoting coaxially to the indexing and locking ring (9) and also having, on the one hand, a main marginal surface of revolution (35) facing the notched main marginal surface of revolution (31) of the indexing and locking ring (9) and provided with a number of notches (27) equal to the number of grooves (23) in the table carrier body (2), and, on the other hand, an auxiliary marginal surface of revolution (36) adjacent to the main marginal surface of revolution and into which the notches (27) in the cam lead laterally, the auxiliary marginal surface of revolution (36) of the cam being situated in the extension of the auxiliary marginal surface of revolution (32) of the indexing and locking ring and also opposite that surface of revolution of the table carrier body (2) in which the rectilinear grooves (23) are formed, the notches (27) in the cam having a likewise generally V-shaped section with flanks which diverge, from the bottom of the notches, both towards the main marginal surface of revolution (35) and towards the auxiliary marginal surface of revolution (36) of the said cam, in such a manner that in an angular position of the cam (6) corresponding to the locking of the rotary table (1), the parts of the main marginal surface of revolution (35) of the cam which are situated between the notches (27) on that surface hold the balls pressed against the flanks of the notches (26) in the indexing and locking ring (9) against the flanks of the grooves (23) in the table carrier body (2) while in an angular position of the cam (6) corresponding to the unlocking of the rotary table (1) the balls (25) can pass completely out of the notches (26) in the indexing and locking ring (9) and penetrate into the notches (27) in the cam, thus freeing the ring for rotation.

2. Mechanism as claimed in claim 1, characterized in that the assembly formed by the indexing and locking ring (9), the balls (25) and the cam (6) is enclosed between two parallel annular surfaces of revolution which are integral with only one of the two members consisting of the table carrier body (2) or the rotary table (1), the cam (6) bearing, preferably through the intermediary of rolling members (5), against one of these two surfaces which is turned towards the main marginal surface of revolution (31) of the indexing and locking ring (9).

3. Mechanism as claimed in claim 1, characterized in that the notched main marginal surfaces (31 - 35) of the indexing and locking ring (9) and of the cam (6) are plane front surfaces of the same diameter, while the auxiliary marginal surfaces (32, 36) of the said ring and of the cam are cylindrical surfaces of the same diameter and the aforesaid grooves (23) are axially directed.

4. Mechanism as claimed in claim 3, characterized in that the auxiliary marginal surfaces of the ring and of the cam are external cylindrical surfaces (32, 36) and wherein the grooves (23) are situated on a larger radius than that of the said notched auxiliary marginal surfaces.

5. Mechanism as claimed in claim 3, characterized in that the auxiliary marginal surfaces of the ring and of the cam are internal cylindrical surfaces (32, 36), and wherein the grooves (23) are situated on a smaller radius than that of the said auxiliary marginal surfaces.

6. Mechanism as claimed in claim 1, characterized in that the main marginal surfaces (31, 35) of the indexing and locking ring (9) and of the cam (6) are cylindrical surfaces, while the auxiliary marginal surfaces (32, 36) of the ring and of the cam are planar, parallel and coaxial, and one of the two parts comprising the ring (9) and the cam (6) is disposed inside the other, the grooves (23) being directed radially.

7. Mechanism as claimed in claim 1, characterized in that the notches (26) in the indexing and locking ring (9) are in the shape of truncated triangular pyramids whose large base is situated on the auxiliary marginal surface (32) of the ring and of which an imaginary side face is perpendicular to the large base and is situated on the main marginal surface (31) of the said ring.

8. Mechanism as claimed in claim 7, characterized in that the small base of the truncated pyramids is formed by a part of a retaining surface belonging to a supplementary ring (7) coaxial to the indexing and locking ring (9).

9. Mechanism as claimed in claim 1, characterized in that the auxiliary marginal surfaces (32, 36) of the indexing and locking ring (9) and of the cam (6) are respectively normal to the corresponding main marginal surface (31, 35).

10. Mechanism as claimed in claim 1, characterized in that in the position of the cam (6) corresponding to the locking of the rotary table (1) the balls (25) project relative to the main marginal surface (31) of the indexing and locking ring (9) and extend very slightly beyond the site of the main marginal surface (35) of the cam (6) in such a manner as to be subjected to a preload from the parts of the said main marginal surface of the cam which are situated between the notches (27) of the said cam.

11. Mechanism as claimed in claim 1, characterized in that the depth of the notches (27) in the cam (6) is such that in the position of the cam (6) corresponding to the unlocking of the rotary table (1), a clearance is provided between the balls (25) engaged in the said notches of the cam and the main marginal surface (31) of the indexing and locking ring (9).

## Patentansprüche

1. Positionierungs- und Feststellvorrichtung für einen Drehtisch (1) auf einem Körper (2) eines Drehtischträgers, umfassend:
- einen Positionierungs- und Feststellring (9), der mit dem Drehtisch, koaxial mit diesem verbunden ist und Aussparungen (26) mit im allgemeinen V-förmigem Querschnitt aufweist, die in eine Rotationshauptumfangsfläche (31) eingearbeitet sind, und zwar angrenzend an eine Rotationshilfsumfangsfläche (32), in die diese Aussparungen quer münden, wobei die Flanken dieser Aussparungen (26) vom Boden der Aussparungen aus divergieren, und zwar zu der Rotationshauptumfangsfläche (31) und zugleich zu der Rotationshilfsumfangsfläche (32),
- eine Vielzahl von Kugeln (25) zum Positionieren und Feststellen, die permanent zum Teil mit den jeweiligen geradlinigen (axialen oder radialen) Auskehlungen (23) in Eingriff stehen, die ebenfalls einen im allgemeinen V-förmigen Querschnitt haben und in einer Rotationsfläche des Körpers (2) des Drehtischträgers eingearbeitet sind, die koaxial zum Positionierungs- und Feststellring (9) liegt und der Rotationshilfsumfangsfläche (32) des Positionierungs- und Feststellerringes gegenüber liegt, wobei die Flanken der Auskehlungen (23) des Körpers des Drehtischträgers vom Boden nach außen divergieren, wobei die Kugeln (25), wahlweise entlang den Auskehlungen (23) entweder eine Feststellposition für den Drehtisch, in der sie zum Teil auch mit den Aussparungen (26) des Positionierungs- und Feststellringes (9) in Eingriff stehen (Fig. 3), oder eine Freigabeposition für den Drehrisch (1) einnehmen können, in der sie sich außerhalb der Aussparungen (26) befinden (Fig. 4),
- und eine Feststellsteuereinrichtung (6), um die Kugeln (25) entlang den Auskehlungen (23) des Körpers (2) des Drehtischträgers zu beaufschlagen,

dadurch gekennzeichnet, daß die Feststellsteuereinrichtung von einem Nocken (6) gebildet wird, der koaxial zum Positionierungs- und Feststellring (9) drehbar montiert ist, und der einerseits eine Rotationshauptumfangsfläche (35), die der Rotationshauptumfangsfläche (31) des Positionierungs- und Feststellringes (9) gegenüerliegt und mit Aussparungen (27) in gleicher Anzahl wie die der Auskehlungen (23) des Körpers (2) des Drehtischträgers versehen ist, und der andererseits eine Rotationshilfsumfangsfläche (36) aufweist, die an die Rotationshauptumfangsfläche angrenzt und in die die Aussparungen (27) des Nockens quer einmünden, wobei die Rotationshilfsumfangsfläche (36) des Nockens sich in der Verlangerung der Rotationshilfsumfangsfläche (32) des Positionierungs- und Feststellringes und außerdem gegenüber der Rotationsoberfläche des Körpers (2) des Drehtischträgers befindet, in der die geradlinigen Auskehlungen (23) eingearbeitet sind, wobei die Aussparungen (27) des Nockens ebenfalls einen im allgemeinen V-förmigen Querschnitt mit Flanken haben, die vom Boden der Aussparungen aus zur Rotationshauptumfangsfläche (35) und zugleich zur Rotationshilfsumfangsfläche (36) des Nockens divergieren, derart, daß in einer Winkelstellung des Nockens (6), die der Feststellung des Drehtisches (1) entspricht, die Bereiche der Rotationshauptumfangsfläche (35) des Nockens, die sich zwischen den Aussparungen (27) dieser Oberfläche befinden, die Kugeln (25) gegen die Flanken der Aussparungen (26) des Positionierungs- und Feststellringes (9) und gegen die Flanken der Auskehlungen (23) des Körpers (2) des Drehtischträgers angedrückt halten, während in der Winkelstellung des Nockens (6), die der Freigabe des Drehtisches (1) entspricht, die Kugeln (25) aus den Aussparungen (26) des Positionierungs- und Festellringes (9) vollständig austreten können und in die Aussparungen (27) des Nockens eintreten und somit die Drehbewegung des Ringes freigeben.

2. Vorrichtung nach Anspruch 1, dadurch gekennzeichnet, daß die Anordnung, die von dem Positionierungs- und Feststellring (9), den Kugeln (25) und dem Nocken (6) gebildet wird, zwischen zwei parallelen, ringförmigen Rotationsflächen eingespannt ist, welche mit einem einzigen der beiden Organe, die von dem Körper (2) des Drehtischträgers oder dem Drehtisch (1) gebildet werden, einen Körper bilden, wobei sich der Nocken (6), vorzugsweise unter Zwischenschaltung von Wälzkörpern (5), auf einer dieser beiden Oberflächen abstützt, die der Rotationshauptumfangsfläche (31) des Positionierungs- und Feststellringes (9) zugewendet ist.

3. Vorrichtung nach Anspruch 1, dadurch gekennzeichnet, daß die mit Aussparungen versehenen Rotationshauptumfangsflächen (31, 35) des Positionierungs- und Feststellringes (9) und des Nockens (6) ebene stirnseitige Oberflächen mit gleichem Durchmesser sind, während die Rotationshilfsumfangsflächen (32, 36) des Ringes und des Nockens zylindrische Oberflächen mit gleichem Durchmesser sind, und daß die genannten Auskehlungen (23) in axialer Richtung verlaufen.

4. Vorrichtung nach Anspruch 3, dadurch gekennzeichnet, daß die Rotationshilfsumfangsflächen des Ringes und des Nockens zylindrische Außenoberflächen (32, 36) sind, und daß die Auskehlungen (23) sich auf einem größeren Radius als dem der mit Aussparungen versehenen Rotationshilfsumfangsflächen befinden.

5. Vorrichtung nach Anspruch 3, dadurch gekennzeichnet, daß die Rotationshilfsumfangsflächen des Ringes und des Nockens zylindrische Innenumfangsflächen (32, 36) sind und daß die Auskehlungen (23) sich auf einem kleineren Radius als dem der Rotationshilfsumfangsflächen befinden.

6. Vorrichtung nach Anspruch 1, dadurch gekennzeichnet, daß die Rotationshauptumfangsflächen (31, 35) des Positionierungs- und Feststellringes (9) und des Nockens (6) zylindrische Oberflächen sind, während die Rotationshilfsumfangsflächen (32, 36) des Ringes und des Nockens ebene, parallele und koaxiale Flächen sind, und daß eines der beiden Teile, die von dem Ring (9) und dem Nocken (6) gebildet werden, sich innerhalb des anderen befindet, wobei die Auskehlungen (23) in radialer Richtung verlaufen.

7. Vorrichtung nach Anspruch 1, dadurch gekennzeichnet, daß die Aussparungen (26) des Positionierungs- und Feststellringes (9) in Form von dreieckigen Pyramidenstümpfen ausgebildet sind, deren große Basis sich auf der Rotationshauptumfangsfläche (32) des Ringes befindet und deren fiktive Seitenwand senkrecht zur großen Basis verläuft und sich auf der Rotationshauptumfangsfläche (31) des Ringes befindet.

8. Vorrichtung nach Anspruch 7, dadurch gekennzeichnet, daß die kleine Basis der Kegelstümpfe von einem Teil einer Haltefläche gebildet wird, die bei einem zusätzlichen Ring (7) koaxial zum Positionierungs- und Feststellring (9) auftritt.

9. Vorrichtung nach Anspruch 1, dadurch gekennzeichnet, daß die Rotationshilfsumfangsflächen (32, 36) des Positionierungs- und Feststellringes (9) und des Nockens (6) jeweils senkrecht zu den entsprechenden Rotationshauptumfangsflächen (31, 35) verlaufen.

10. Vorrichtung nach Anspruch 1, dadurch gekennzeichnet, daß die Kugeln (25), in der Position der Nockens (6), die der Feststellung des Drehtisches (1) entspricht, gegenüber der Rotationshauptumfangsfläche (31) des Positionierungs- und Feststellringes (9) vorstehen und leicht über den Ort der Rotationshauptumfangsfläche (35) des Nockens (6) hinausragen, derart, daß sie einer Vorbelastung von Seiten der Bereiche der Rotationshauptumfangsfläche des Nockens unterliegen, die sich zwischen den Aussparungen (27) des Nockens befinden.

11. Vorrichtung nach Anspruch 1, dadurch gekennzeichnet, daß die Tiefe der Aussparungen (27) des Nockens (6) so gewählt ist, daß in der Position des Nockens (6), die der Freigabe des Drehtisches (1) entspricht, ein Spiel zwischen den Kugeln (25), die mit den Aussparungen des Nockens in Eingriff stehen, und der Rotationshauptumfangsfläche (31) des Positionierungs- und Feststellringes (9) ausgebildet ist.

FIG_1

0 136 925

## FIG. 2

## FIG_4

## FIG_3

## FIG_5

FIG.6

FIG.7

FIG.8